# EUROPÄISCHE PATENTANMELDUNG

(11) **EP 0 603 646 A1**
(43) Veröffentlichungstag der Anmeldung: **29.06.1994**
(21) Anmeldenummer: 93119762.8
(22) Anmeldetag: 08.12.1993
(51) Int. Cl.: B29B 13/10, B02C 4/30, B02C 23/12, B29B 17/00, B29K 105/26

(54) **Verfahren und Vorrichtung zum Zerkleinern, insbesondere zum Pulverisieren, von Kunststoffen**

(30) Priorität: 21.12.1992 DE 4243282
(71) Anmelder: BAYER AG, 51368 Leverkusen (DE)
(72) Erfinder: Wagner, Joachim, Dr., D-51061 Köln (DE); Rasshofer, Werner, Dr., D-51061 Köln (DE); Peltzer, Karl, D-42799 Leichlingen (DE)

(57) **Zusammenfassung**

Kunststoffteile lassen sich besonders wirtschaftlich für die Wiederverwendung des Materials zerkleinern, indem man sie einer Vorrichtung zuführt, welche mit zwei Walzen (1, 2) einen Walzenspalt (3) bildet, wobei dieser Walzenspalt mindestens zwei Walzenspalt-Abschnitte (7 bzw. 8, 9) unterschiedlicher Spaltweite aufweist, wobei diese Walzen (1, 2) mit unterschiedlicher Umfangsgeschwindigkeit betrieben werden, wobei im Walzenspalt-Abschnitt (7 bzw. 8) mit der geringsten Spaltweite eine Schergeschwindigkeit von 0,001 sec⁻¹ bis 100 000 sec⁻¹ eingehalten wird, die zu zerkleinernden Kunststoff-Materialien zunächst dem Walzenspalt-Abschnitt (9) der größten Spaltweite zugeführt werden und dann nach dessen Passieren dem Walzenspalt-Abschnitt (7 bzw. 8) der (nächst) kleineren Spaltweite zugeführt werden und wobei zu zerkleinernde Materialien einer Mindestdichte von 0,005 g/cm³ verarbeitet werden.

## Beschreibung

Die Erfindung betrifft ein Verfahren und eine Vorrichtung zum Zerkleinern, insbesondere zum Pulverisieren, von Kunststoffen oder Kunststoffe enthaltenden Materialien, Kompositen oder Gemischen bzw. Gemengen, zwischen zwei feststehend gelagerten, einen Walzenspalt bildenden Walzen.

Alle Verfahren zum Recycling von Kunststoffen beinhalten eine Zerkleinerungsstufe. Die Kosten der Zerkleinerungsstufe sind ein maßgeblicher Wirtschaftlichkeitsfaktor des Verfahrens und damit entscheidend, ob sich die gesellschaftlich gewünschte Wiederverwertung gebrauchter Kunststoffe überhaupt durchsetzen kann.

Es ist allgemein bekannt, Materialien in einem Walzenspalt zu zerkleinern. Dabei ist zwischen zylindrischen Walzen nur ein Walzenspalt vorhanden, der als Mahlvorrichtung dient. Mehrfache Walzenanordnungen in Form von Kaskaden sind sehr kostenintensiv und es ist nicht möglich, eine größere Menge Mahlgut simultan auf die Walzen aufzugeben, da überschüssiges Mahlgut sofort seitlich an den Walzen vorbei heraustritt. Die bekannten Maßnahmen bedingen einen verhältnismäßig langen Mahlvorgang mit kostenintensiven Vorrichtungen.

Es besteht die Aufgabe, ein Verfahren und eine Vorrichtung für den eingangs genannten Zweck zu finden, womit der Zerkleinerungsvorgang kostengünstig und schnell durchführbar ist.

Diese Aufgabe wird dadurch gelöst, daß
a) ein Walzenspalt mit mindestens zwei Walzenspalt-Abschnitten unterschiedlicher Spaltweite verwendet wird,
b) die Walzen mit unterschiedlicher Umfangsgeschwindigkeit betrieben werden,
c) im Walzenspalt-Abschnitt mit der geringsten Spaltweite eine Schergeschwindigkeit von 0,0001 sec⁻¹ bis 100 000 sec⁻¹ eingehalten wird,
d) die zu zerkleinernden Materialien zunächst dem Walzenspalt-Abschnitt der größten Spaltweite zugeführt werden und nach dessen Passieren dem Walzenspalt-Abschnitt der (nächst) kleineren Spaltweite zugeführt werden und
e) zu zerkleinernde Materialien einer Mindestdichte von 0,005 g/cm³ verarbeitet werden.

Auf diese Weise wird erreicht, daß Gegenstände aus Kunststoff oder Kunststoff enthaltenden Materialien, Kompositen oder Gemischen bzw. Gemengen kostengünstig und schnell zerkleinert, insbesondere pulverisiert, werden können Durch die Verwendung eines Walzenspaltes mit mindestens zwei Abschnitten unterschiedlicher Spaltweite läßt sich der Platzbedarf der für die Durchführung des Verfahrens erforderlichen Vorrichtung auf ein Minimum reduzieren, und die Transportwege zwischen den einzelnen Mahlstufen werden klein gehalten. Das Betreiben der Walzen mit unterschiedlicher Umfangsgeschwindigkeit bewirkt nicht nur ein Zerdrücken der Materialien, sondern einen zusätzlichen Reißeffekt. Das neue Verfahren ist deshalb auch für elastische Materialien mit niedriger Dichte gut geeignet. Ein Arbeiten mit einer Schergeschwindigkeit im genannten Bereich im Walzenspalt mit der geringsten Spaltweite optimiert diese Wirkung. Auf eine Siebung oder Sichtung zum Aussortieren des zu groben Mahlgutes zwischen den einzelnen Mahlstufen oder nach dem Passieren der letzten Mahlstufe kann gegebenenfalls verzichtet werden. Die Walzen können gleichsinnig oder gegensinnig drehen. Ein Nachstellen des Walzenspaltes während des Mahlvorganges bei sukzessive feiner werdendem Mahlgut ist nicht erforderlich. Dadurch verbilligt sich die Vorrichtung wesentlich.

Vorzugsweise wird im Abschnitt des Walzenspaltes mit der geringsten Weite ein Schergefälle von 100 sec⁻¹ bis 20 000 sec⁻¹, bevorzugt von 1 000 sec⁻¹ bis 10 000 sec⁻¹, eingehalten.

Ein Schergefälle in diesen Bereichen begünstigt die Zerkleinerung.

Gemäß einer weiteren bevorzugten Durchführungsform des Verfahrens werden die Walzen bei -20°C bis 200°C, bevorzugt bei 0°C bis 100°C, besonders bevorzugt bei 10°C bis 80°C, betrieben. Eine entsprechende Temperierung der Walzen, abgestimmt auf die eingesetzten zu zerkleinernden Materialien, begünstigt die Mahlwirkung.

Als zu zerkleinernde Kunststoffe kommen vorzugsweise chemisch und/oder physikalisch vernetzte Polyurethane, Polyharnstoffe bzw. Polyurethan-Harnstoffe oder Gemische, Gemenge oder Kompositteile aus anderen Materialien mit diesen physikalisch vernetzten Polyurethanen, Polyharnstoffen bzw. Polyurethan-Harnstoffen in Frage.

Geeignet sind auch ABS und ABS-Blends mit anderen Kunststoffen, PVC und PVC-Blends mit anderen Kunststoffen, SMA, Polyamid oder Polyamid-Blends mit anderen thermoplastischen Kunststoffen, Polyolefine oder Polyolefin-Blends mit anderen thermoplastischen Kunststoffen, besonders bevorzugt Polypropylenharze oder Polystyrolharze. Auch vernetzte Kautschuke sind einsetzbar.

Die angegebenen Kunststoffe können noch weiter modifiziert sein. So können sie übliche mineralische oder organische Füllstofe oder Verstärkungsmaterialien in faserförmiger, flächiger oder anderer Art in kontinuierlicher oder diskreter Struktur haben; sie können übliche Verarbeitungshilfsmittel oder Mittel zur Verbesserung von mechanischen, Oberflächen- oder Alterungseigenschaften beinhalten. Die angegebenen Kunststoffe können auch lackiert sein oder eine anderweitige Oberflächenmodifizierung durch stromlose oder elektrolytische Metallisierung oder Plattierung, Oberflächenätzung, Plasmabehandlung etc. erfahren haben.

Besonders bevorzugt sind thermoplastische oder duroplastische Polyurethane, Polyurethan-Harnstoffe oder Polyharnstoffe, wie sie z.B. beschrieben sind in Kunststoff-Handbuch, Band 7, "Polyurethane", Carl Hanser-Verlag, München/Wien, 1. Auflage 1966 und 2. Auflage 1983.

Solche Polyurethane, Polyurethan-Harnstoffe oder Polyharnstoffe haben eine Dichte von größer 0,005 g/cm³ und werden z.B. zur Herstellung von Stoßfängern, für Dachhimmel, Hutablagen, Kofferraum-Auskleidungen, Türinnen-Verkleidungen, Kopfstützen, Sitze, Armaturentafeln, Konsolen, in energieabsorbierenden Schäumen etc. eingesetzt.

Ebenfalls besonders bevorzugt sind Verbundkörper oder Gemische aus diesen thermoplastischen oder duroplastischen Polyurethanen, Polyurethan-Harnstoffen oder Polyharnstoffen mit Materialien, wie sie bei der Herstellung von Verbundkörpern eingesetzt werden, wobei diese Materialien z.B. Glasmatten, Textilien, Kunststoffolien, Schaumfolien, Holzkörper oder auch duromergebundene Zellulosematerialien sein können.

Das so hergestellte Pulver eignet sich als Ausgangsmaterial für verschiedenste Recycling-Techniken:
- Thermoplasten können in Pulverform der konventionellen Thermoplastverarbeitung zugeführt werden und lassen sich dabei relativ einfach verarbeiten und blenden.
- Polyurethane sind in dieser Pulverform bei chemolytischen Verfahren, wie z.B. Glykolyse, Alkoholyse, Aminolyse und Hydrolyse, vorteilhaft einsetzbar.
   Auch für das Fließpressen und die Spritzguß-Verarbeitung ist die Pulverform vorteilhaft; dies gilt besonders für lackiertes Ausgangsmaterial.
   Für den Einsatz als matrix-ähnliches und matrixgleiches Füllmaterial in PUR-Formulierungen ist die Pulverform in möglichst feiner Verteilung eine notwendige Voraussetzung für hohes Eigenschaftsniveau und gute Oberflächengestaltung.
- Die so hergestellten Polymerpulver können für thermische Behandlungsverfahren vorteilhaft eingesetzt werden.

Die neue Vorrichtung zur Durchführung des Verfahrens geht aus von zwei Walzen, die miteinander einen Walzenspalt bilden.

Das Neue ist darin zu sehen, daß der Walzenspalt mindestens zwei Walzenspalt-Abschnitte unterschiedlicher Spaltweite aufweist, wobei dem Walzenspalt-Abschnitt mit der größten Spaltweite eingangsseitig eine Material-Aufgabestation zugeordnet ist und seine Ausgangsseite mit der Eingangsseite des Walzenspalt-Abschnittes der (nächst) kleineren Spaltweite mit einer Materialrückführung verbunden ist, wobei benachbarte Walzenspalt-Abschnitte durch Wände gegeneinander abgegrenzt sind.

Auf diese Weise ist die Vorrichtung sehr kompakt und kommt mit zwei Walzen aus. Dadurch werden auch die Antriebsprobleme vereinfacht und ein Nachstellen einer Walze während des Mahlvorganges bei sukzessive kleiner werdendem Mahlgut ist nicht erforderlich.

Vorzugsweise sind die Abschnitte unterschiedlicher Spaltweite durch eine Walze mit entsprechenden Abschnitten unterschiedlicher Durchmesser gebildet, wobei der Durchmesser-Unterschied dieser Abschnitte 0,01 mm bis 10 mm, bevorzugt 0,05 mm bis 1 mm, besonders bevorzugt 0,1 bis 0,5 mm, beträgt.

Die einzelnen Durchmesser der Walzen sind so bemessen, daß sich der Mahlvorgang mit größtmöglichem Durchsatz bei größtmöglicher Feinheit des Produktes ausführen läßt. Die Gesamtlänge des Walzenabschnittes mit dem größeren Walzendurchmesser ist in der Regel größer als die Gesamtlänge des Walzenbereiches mit dem nächst kleineren Durchmesser. Die genauen Längenverhältnisse werden so abgestimmt, daß die Abschnitte unterschiedlicher Weite des Spaltes gleiche Massendurchsätze ermöglichen. Das in einem Spaltabschnitt gemahlene Produkt läßt sich ohne Sichtung oder Siebung über eine Fördereinrichtung zu dem nächsten Spaltabschnitt transportieren, um dort noch feiner gemahlen zu werden. Als Fördereinrichtungen hierfür eignen sich u.a. Becherförderer oder Kratzförderer.

Gemäß einer besonderen Ausführungsform der Vorrichtung weist eine der Walzen 2 bis 10, bevorzugt 2 bis 5, besonders bevorzugt 2 bis 4, Abschnitte unterschiedlicher Durchmesser auf.

Vorzugsweise ist die Walze mit unterschiedlichen Durchmessern über ihre Länge symmetrisch aufgebaut, wobei der Abschnitt geringsten Durchmessers in der Mitte und die Abschnitte größsten Durchmessers an ihren Enden liegen.

Auf diese Weise wird eine symmetrische Beanspruchung der Walzen erzielt.

Es versteht sich, daß auch beide Walzen Abschnitte unterschiedlichen Durchmessers aufweisen können, um die gewünschten unterschiedlichen Spaltweiten zu erzielen. Eine solche Ausgestaltung ist natürlich aufwendiger.

Vorzugsweise weisen die Oberflächen der Walzen eine Struktur der gemittelten Rauhtiefe nach DIN 4762 und 4768 im Bereich von 0,01 mm bis 0,1 mm, bevorzugt bis 0,05 mm, auf.

Alternativ hierzu sind die Oberflächen der Walzen glatt, d.h. sie weisen eine gemittelte Rauhtiefe unterhalb von 0,01 mm auf.

Die Wahl der Oberflächen-Beschaffenheit der Walzen ist insbesondere für den Einzug des Materials in den Walzenspalt sowie für die Mahlwirkung von Bedeutung.

Es versteht sich, daß die einzelnen Walzenabschnitte unterschiedliche Oberflächen-Beschaffenheit aufweisen können.

Schließlich sind auch temperierbare Walzen von Vorteil.

Die neue Vorrichtung bzw. das mit ihrer Hilfe hergestellte Mahlgut bietet eine große Anzahl von Vorteilen:

Beliebige Kunststoffe mit stark unterschiedlichen Dichten lassen sich gemeinsam verarbeiten; sehr weiche, zerkleinerte Kunststoffe geringer Dichte lassen sich ebenso verarbeiten wie beliebige Gemische aus thermoplastischem mit duroplastischem Kunststoff bzw. Werkstoffen und beliebige Gemische aus spröden und elastischen bzw. weich-elastischen Materialien.

Insbesondere ist von Vorteil, daß jetzt Gemische aus Thermoplasten und Duroplasten im Spritzguß verarbeitbar sind, die sich vorher wegen eines zu groben Duroplastanteils nicht verspritzen ließen oder die jetzt bessere Eigenschaften haben, da die Duromerpartikel durch ihre sehr geringe Größe und gute Verteilung nun sehr gut in die Thermoplastmatrix eingebunden sind. Die neue Vorrichtung erlaubt es, besonders feinteilige Pulver herzustellen. Die Konstruktion der neuen Vorrichtung ist einfach und kostengünstig und der Mahlvorgang ist effektiver.

Das neue Verfahren ist wirtschaftlich, so daß viele von Pulver oder Granulat ausgehende Recycling- oder Wiederverarbeitungsmaßnahmen damit auch wirtschaftlich bedeutend werden können. Es lassen sich nämlich alle Kunststoffe zerkleinern; es können Kunststoffe in jeder beliebigen Kombination gemeinsam zerkleinert werden; es können alle Kunststoffe in jeder Form eines oder nur teilweise kraftschlüssigen Verbundes gemeinsam zerkleinert werden; es können alle Kunststoffe in jeder Form eines Gemisches oder Gemenges gemeinsam zerkleinert werden; es können Kunststoffe in jeder Form eines Gemisches, Gemenges oder Verbundkörpers mit beliebigen Nichtkunststoffen gemeinsam zerkleinert werden, z.B. Holz, Glas, Keramik oder Metall.

Je nach Größe der zu zerkleinernden Teile kann eine Vorzerkleinerung erforderlich sein, damit die Materialien vom Walzenspalt erfaßt werden.

In der Zeichnung ist die neue Vorrichtung in einem Ausführungsbeispiel rein schematisch dargestellt und nachstehend näher erläutert. Es zeigen:

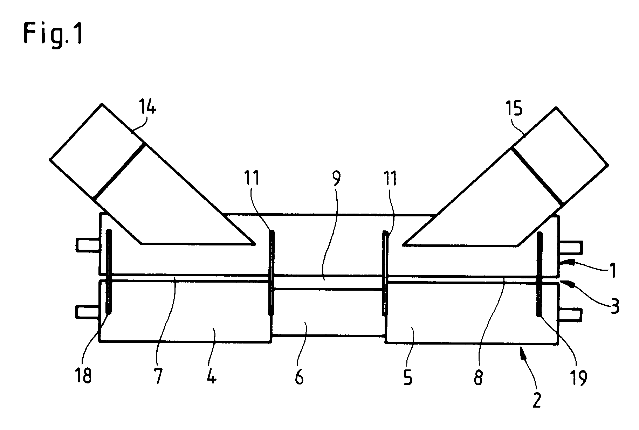

- Fig. 1: eine Draufsicht und
- Fig. 2: eine Seitenansicht.

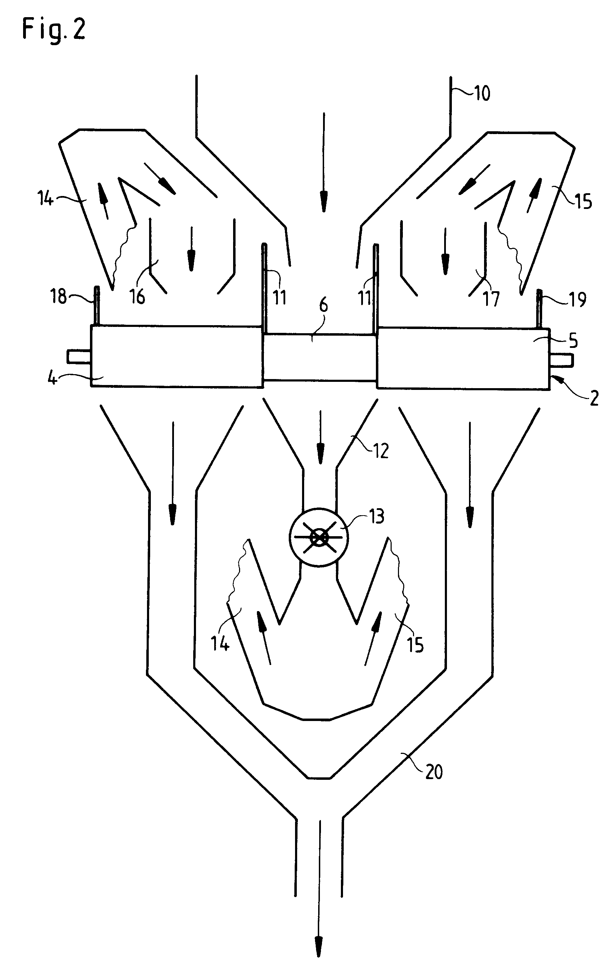

Die Vorrichtung besteht aus zwei Walzen 1, 2, welche zwischen sich einen Walzenspalt 3 bilden und mit unterschiedlicher Umfangsgeschwindigkeit von einem nicht dargestellten Antrieb über ein nicht dargestelltes Getriebe antreibbar sind. Die Walze 1 besitzt einen Durchmesser von 600 mm, die Walze 2 besitzt zwei symmetrisch angeordnete äußere Abschnitte 4, 5 mit einem Durchmesser von 600 mm, also entsprechend demjenigen der Walze 1, der mittlere Abschnitt 6 besitzt einen Durchmesser von 599,5 mm. Der Walzenspalt 3 besitzt entsprechend den Abschnitten 4, 5, 6 der Walze 2 Walzenspalt-Abschnitte 7, 8, 9. Die Walzenspalt-Abschnitte 7, 8 besitzen eine Spaltweite von 200 µm; der Walzenspalt-Abschnitt 9 von 700 µm. Über dem Walzenspalt-Abschnitt 9 ist als Materialaufgabestation ein Aufgabetrichter 10 (Fig. 2) angeordnet. Wände 11 grenzen den Walzenspalt-Abschnitt 9 gegen die Walzenspalt-Abschnitte 7, 8 ab. Unterhalb des Walzenspalt-Abschnittes 9 ist ein Auffangtrichter 12 mit Zellradschleuse 13 angeordnet. Unterhalb dieser Zellradschleuse 13 führen symmetrisch angeordnete, nicht näher dargestellte, als mechanische Förderer ausgebildete Materialrückführungen 14, 15 nach oben und öffnen in die über den Walzenspalt-Abschnitten 7, 8 angeordneten Aufgabetrichter 16, 17 (Fig. 2). Wände 18, 19 begrenzen die Walzenspalt-Abschnitte 7, 8 zu den Seiten hin. Unterhalb der Walzenspalt-Abschnitte 7, 8 ist ein Auffang- und Abführsystem 20 für das Mahlgut angeordnet.

Es ist ohne Darstellung vorstellbar, daß der Durchmesser der Walzenabschnitte 4 und 5 der Walze 2 nicht mit dem Durchmesser der Walze 1 übereinzustimmen braucht. Die Walze 1 kann durchaus größeren oder kleineren Durchmesser haben, um unterschiedliche Umfangsgeschwindigkeiten bei gleicher Drehzahl zu erzielen. Auch der Betrieb einer solchen Vorrichtung mit unterschiedlichen Walzendurchmessern ist zusätzlich mit unterschiedlichen Drehzahlen möglich. Wichtig ist nur, daß in den Spaltabschnitten ein ausreichendes Schergefälle entsteht.

## Patentansprüche

1. Verfahren zum Zerkleinern, insbesondere zum Pulverisieren, von Kunststoffen oder Kunststoffe enthaltenden Materialien, Kompositen oder Gemischen bzw. Gemengen, zwischen zwei feststehend gelagerten, einen Walzenspalt (3) bildenden Walzen (1, 2), dadurch gekennzeichnet, daß
a) ein Walzenspalt (3) mit mindestens zwei Walzenspalt-Abschnitten (7 bzw. 8, 9) unterschiedlicher Spaltweite verwendet wird,
b) die Walzen (1, 2) mit unterschiedlicher Umfangsgeschwindigkeit betrieben werden,
c) im Walzenspalt-Abschnitt (7 bzw. 8) mit der geringsten Spaltweite eine Schergeschwindigkeit von 0,0001 sec⁻¹ bis 100 000 sec⁻¹ eingehalten wird,
d) die zu zerkleinernden Materialien zunächst dem Walzenspalt-Abschnitt (9) der größten Spaltweite zugeführt werden und nach dessen Passieren dem Walzenspalt-Abschnitt (7 bzw. 8) der (nächst) kleineren Spaltweite zugeführt werden und
e) zu zerkleinernde Materialien einer Mindestdichte von 0,005 g/cm³ verarbeitet werden.

2. Verfahren nach Anspruch 1, dadurch gekennzeichnet, daß im Walzenabschnitt (7 bzw. 8) mit der geringsten Weite ein Schergefälle von 100 sec⁻¹ bis 20 000 sec⁻¹, bevorzugt von 1 000 sec⁻¹ bis 10 000 sec⁻¹, eingehalten wird.

3. Verfahren nach Anspruch 1 oder 2, dadurch gekennzeichnet, daß die Walzen (1, 2) bei -20°C bis 200°C, bevorzugt bei 0°C bis 100°C, besonders bevorzugt bei 10°C bis 80°C, betrieben werden.

4. Verfahren nach einem der Ansprüche 1 bis 3, dadurch gekennzeichnet, daß als zu zerkleinernde Kunststoffe chemisch und/oder physikalisch vernetzte Polyurethane, Polyharnstoffe bzw. Polyurethan-Harnstoffe oder Gemische, Gemenge oder Kompositteile aus anderen Materialien mit diesen physikalisch vernetzten Polyurethanen, Polyharnstoffen bzw. Polyurethan-Harnstoffen eingesetzt werden.

5. Vorrichtung zur Durchführung des Verfahrens, bestehend aus zwei Walzen (1, 2), die miteinander einen Walzenspalt (3) bilden, dadurch gekennzeichnet, daß der Walzenspalt (3) mindestens zwei Walzenspalt-Abschnitte (7 bzw. 8, 9) unterschiedlicher Spaltweite aufweist, wobei dem Walzenspalt-Abschnitt (9) mit der größten Spaltweite eingangsseitig eine Material-Aufgabestation (10) zugeordnet ist und seine Ausgangsseite mit der Eingangsseite des Walzenspalt-Abschnittes (7 bzw. 8) der (nächst) kleineren Spaltweite mit einer Materialrückführung (14, 15) verbunden ist, wobei benachbarte Walzenspalt-Abschnitte (7 bzw. 8, 9) durch Wände (11) gegeneinander abgegrenzt sind.

6. Vorrichtung nach Anspruch 5, dadurch gekennzeichnet, daß die Walzenspalt-Abschnitte (7 bzw. 8, 9) unterschiedlicher Spaltweite durch eine Walze (2) mit entsprechenden Abschnitten (4, 5, 6) unterschiedlicher Durchmesser gebildet sind, wobei der Durchmesser-Unterschied dieser Abschnitte (4 bzw. 5, 6) 0,01 mm bis 10 mm, bevorzugt 0,05 bis 1 mm und besonders bevorzugt 0,1 bis 0,5 mm, beträgt.

7. Vorrichtung nach Anspruch 6, dadurch gekennzeichnet, daß eine der Walzen (2) 2 bis 10, bevorzugt 2 bis 5, besonders bevorzugt 2 bis 4, Abschnitte (7 bzw. 8, 9) unterschiedlicher Durchmesser aufweist.

8. Vorrichtung nach einem der Ansprüche 5, 6 oder 7, dadurch gekennzeichnet, daß die Walze (2) mit unterschiedlichen Durchmessern über ihre Länge symmetrisch aufgebaut ist, wobei der Abschnitt (6) geringsten Durchmessers in ihrer Mitte und die Abschnitte (4, 5) größten Durchmessers an ihrem Ende angeordnet sind.

9. Vorrichtung nach einem der Ansprüche 5 bis 8, dadurch gekennzeichnet, daß die Oberflächen der Walzen (1, 2) eine Oberflächenstruktur der gemittelten Rauhtiefe nach DIN 4762 und 4768 im Bereich von 0,01 mm bis 0,1 mm, bevorzugt bis 0,05 mm, aufweisen.

10. Vorrichtung nach einem der Ansprüche 5 bis 8, dadurch gekennzeichnet, daß die Oberflächen der Walzen (1, 2) glatt sind, d.h. eine gemittelte Rauhtiefe unterhalb von 0,01 mm aufweisen.
